Europäisches Patentamt

European Patent Office

Office européen des brevets

(11) Publication number: **0 217 486**

**B1**

(12) **EUROPEAN PATENT SPECIFICATION**

(45) Date of publication of patent specification: **03.10.90**

(21) Application number: **86304507.6**

(22) Date of filing: **12.06.86**

(51) Int. Cl.⁵: **G 06 F 13/42, H 04 L 7/00, G 06 F 5/06**

(54) A synchronizing system.

(30) Priority: **27.09.85 US 781868**

(43) Date of publication of application: **08.04.87 Bulletin 87/15**

(45) Publication of the grant of the patent: **03.10.90 Bulletin 90/40**

(84) Designated Contracting States: **DE FR GB IT**

(56) References cited: **WO-A-83/01858**

ELECTRONIC DESIGN, vol. 30, no. 10, 13th May 1982, pages 181-186, Waseca, MN., Denville, NJ., US; W.T.GREER, Jr.: "FIFO architecture minimizes buffer delays"

IBM TECHNICAL DISCLOSURE BULLETIN, vol. 20, no. 2, July 1977, pages 732-733, New York, US; C.W.HANNAFORD: "Sequentially addressed storage"

(73) Proprietor: **Hewlett-Packard Company P.O. Box 10301 3000 Hanover Street Palo Alto California 94303-0890 (US)**

(72) Inventor: **Nordby, Rasmus Kammerrabensvej 25 S.V. DK-2970 Horsholm (DK)** Inventor: **Crandall, Douglas 45 Newell Road No. 220 E. Palo Alto California 94303 (US)**

(74) Representative: **Colgan, Stephen James et al CARPMAELS & RANSFORD 43 Bloomsbury Square London WC1A 2RA (GB)**

(56) References cited:

IBM TECHNICAL DISCLOSURE BULLETIN, vol. 22, no. 10, March 1980, pages 4427-4428, New York, US; P.J.CURLANDER et al.: "Gray coded communication controlls"

IBM TECHNICAL DISCLOSURE BULLETIN, vol. 21, no. 5, October 1978, page 2009, New York, US; K.A.MOE: "Method for controller/device interface deskewing avoidance"

Courier Press, Leamington Spa, England.

## Description

### Background of the invention

The present invention relates to a synchronizing system being a computer storage device, and more particularly relates to means used between two devices transmitting data at different speeds to counteract this differential as a buffer.

In any circuit interfacing two non-correlated and asynchronous clocks, there will exist a non-zero probability of sampling a signal from one system with the clock from the other system while the signal is changing. The result of such a sampling, where set-up and hold times are not met, may be an erroneous output. Unpredictably the output can be logic "1", logic "0" or in a "metastable state" between "1" and "0". This undefined logic state may be interpreted differently by different receiving devices, and in a general configuration it is able to propagate through the succeeding logic gates.

this "metastable state" is discussed in the articles, "General Theory of Metastable Operation" by Leonard R. Marino, P107—P115, IEEE TRANSACTIONS ON COMPUTERS, Vol. C.30, NO. 2, February 1981, "Anomalous Behavior of Synchronizer and Arbiter Circuits" by Thomas J. Chaney et al, P421—P422, IEEE TRANSACTIONS ON COMPUTERS, Correspondence, April 1973, and "Circuit Technology in a large computer system" by D.J. Kinniment et al, P435—P441, THE RADIO AND ELECTRONIC ENGINEER, Vol. 43, No. 7, July 1973. The metastable state is potentially unstable and the probability that the output will stay in metastable state decays exponentially with time. All logic families exhibit the metastable operation, when sampling occurs on a transition. However, families with a high-gain bandwidth product are less inclined to exhibit the metastable state than those with a low-gain bandwidth product. The metastable problem is a fundamental problem in digital circuits interfacing asynchronous clocks, and there exists no exact solution to avoid errors. However, the probability of inducing errors due to the metastable operation can be reduced by allowing longer time for the output to settle from the metastable state and by employing high-gain bandwidth product devices.

Electronic Design, Vol. 30, No. 10, 13th May 1982, pages 181—186 describe a technique for solving an addressing problem in FIFO memory buffers. The buffers use separate clocks for writing and reading so that respective data can be loaded/unloaded at different rates. Ring counters keep track of read and write addresses stored in RAM. IBM Technical Disclosure bulletin, Vol. 20, No. 2, July 1977, pages 752—753 describes a way of decreasing addressing complexity wherein a shift register is built up from a random-access array of storage cells. An on-chip address generator connects sequential storage locations to external data lines when the array is enabled. Advantages include total size reduction of the address generator and multiple identical macros.

The aim of the invention is to pass data reliably across a boundary between two independent, non-correlated clocks, which may be referred to as the receiving and transmitting clocks, and thereby minimize the occurrence of errors caused by asynchronous samplings.

In order to achieve this aim, the invention provides a synchronising system as defined by the appended claims.

In the preferred embodiment of the invention, the synchronizer transfers data bytes sourced at one clock rate to a data sink which removes them at another clock rate. The two clock frequencies can have arbitrary phase and frequency relationship, i.e. asynchronous, faster or slower. The synchronizer performs a handshake at the input and output sides synchronous with the input clock and output clock respectively. Preferably, the synchronizer is made as an NMOS circuit consisting of a RAM with address logic allows for independent read and write access to the RAM. The circuit is optimized to minimize the error rate when the read and the write clocks are asynchronous. Error free transfer through the synchronizer occurs whenever metastable states generated by asynchronous samplings have settled to an arbitrary valid logic level, i.e. one or zero, within one clock cycle. The read and write clocks can be synchronous or asynchronous and they can be periodic or aperiodic. Furthermore, a low level synchronizer handshake is implemented on each side of the synchronizer and allows for use of fill characters when no data is available and for data source hold-off when data overflow would otherwise occur. Independent enable lines on sink and source side can be used to place the outputs on each side in a high impedance state.

### Brief description of the drawings

Figure 1 is a system block diagram of a preferred embodiment of the present invention describing the system configuration of a system A, a system B, and a synchronizer.

Figures 2A—B show a functional block diagram of the synchronizer employing a two port memory with address logic circuit.

Figures 3A—D show a circuit diagram of the synchronizer describing the detailed circuit configuration of the functional block diagram shown in Figures 2A—B.

Figure 4 is an illustration of the metastable state in a flip-flop used for the synchronizer.

Figure 5 is an illustration of the conventions used in the following timing charts.

Figure 6 is a timing chart of the receiving side of the synchronizing system.

Figure 7 is a timing chart of the transmitting side of the synchronizing system.

Figures 8A—C show a timing chart of the synchronizing system in cases where clock signal A is two times slower than clock signal B.

Figures 9A—C shown a timing chart of the synchronizing system in cases where clock signal A is two times faster than clock signal B.

Figures 10A—C show a timing chart of the synchronizing system in cases where clock signal A is the same as clock signal B.

## Description of the preferred embodiment

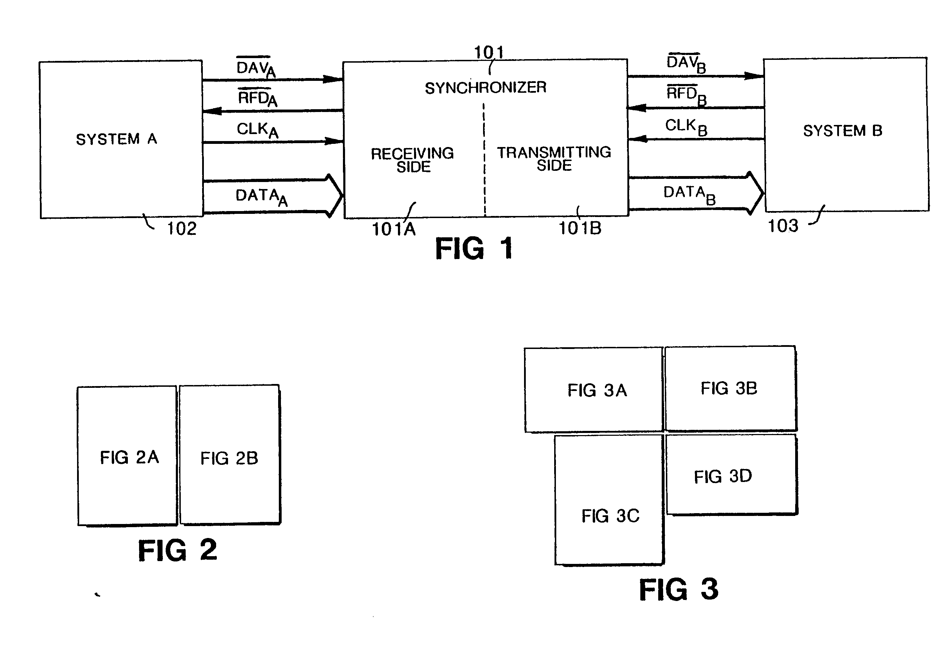

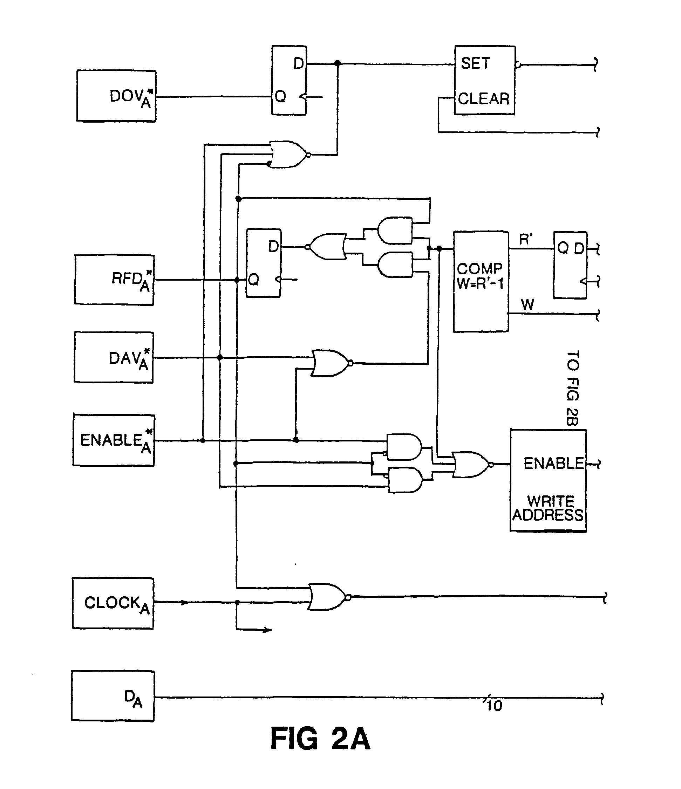

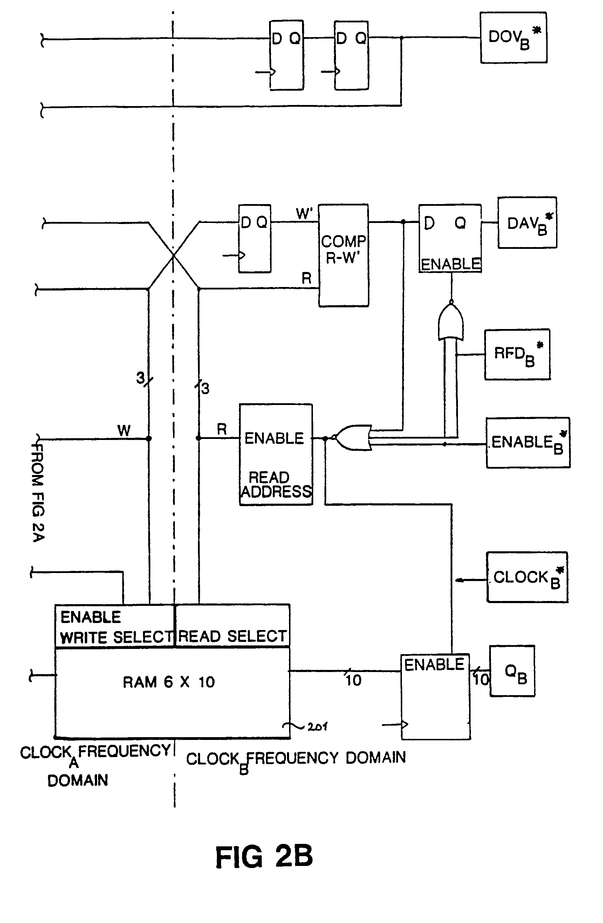

In Figure 1, a synchronizing system is shown as a system configuration. In the embodiment of the invention, the synchronizing system consists of a synchronizer 101 having a receiving side 101A coupled to a system A 102 and a transmitting side 101B coupled to a system B 103. The coupling of the synchronizer 101 to the system A 102 and the system B 103 is performed by a synchronous and interlocked handshake. It is synchronous because all lines in the interface are synchronous with the transfer clock frequency. It is used on the input and output side of the synchronizer circuit in which case the synchronizer translates one synchronous handshake into a similar handshake synchronous with an arbitrary second clock. Data (DATA) is transferred in bytes of any width at the rate of a clock signal (CLK). Each data byte is labelled with a "data available" signal (DAV). For each clock cycle the data sink presents a "ready for data" signal (RFD).

In Figure 2, the synchronizer 101 is explained in more detail as a functional block diagram. The synchronizer 101 is organized as a two port memory 201 with a write address controlled by the receiving clock signal CLK A and the handshake lines on the receiving side and a read address controlled by the transmitting clock CLK B and the handshake lines on the transmitting side. By addressing the two port memory cells in a unit distance code which results in only one bit changing each time it advances to the next state, an important feature for asynchronous operation is obtained. Namely, the address control logic can be designed for asynchronous operation so that the outcome of the asynchronous sampling is no longer important. The only requirement for error free transfer is that the asynchronous sampling has settled to a valid logic one or zero level in whatever time the control logic allows for metastable settling. With 6 bits depth of the two port memory, one clock period is allowed for metastable settling. If for a given logic family this introduces a non-satisfactory error rate, the circuit architecture allows for arbitrarily long metastable settling time, i.e. arbitrarily low error rate, with the expense of added depth to the two port memory and cascaded asynchronous samplings. Cascading M extra asynchronous samplings increases the through-delay by M transmitting clock cycles.

The function of the address control logic shown in Figure 2 is to determine the following three logic operations: first, whether a valid read out can be done from the two port memory and a write cycle of valid data has been completed or not; second, whether an excessive amount of data is accumulated in the two port memory and whether the next byte sent into the synchronizer can be accommodated in the two port memory or not; and third, whether a data overflow has actually occurred in the two port memory or not, in case the data source does not obey the handshake by a data overflow signal (DOV). The read and write operation will be described in more details hereafter. Writing data into the two port memory cell to which the write address is pointing is done each transmit clock cycle, if the synchronizer status is ready for data, and if valid data is available from the source. The synchronizer is considered to be ready for data when there is still one vacant cell left in the two port memory. To determine this vacancy condition, an asynchronous sampling of the read address with the receiving clock is required. The write address is advanced by one only after the completion of writing in; otherwise it is not advanced. Reading data out of the two port memory cell to which the read address is pointing is done each transmitting clock cycle, if the write operation into this cell has been completed. The write operation is considered completed if the read address does not equal the write address. This comparison involves an asynchronous sampling of the write address with the receiving clock. The read address is advanced by one only after the completion of valid reading out; otherwise it is not advanced.

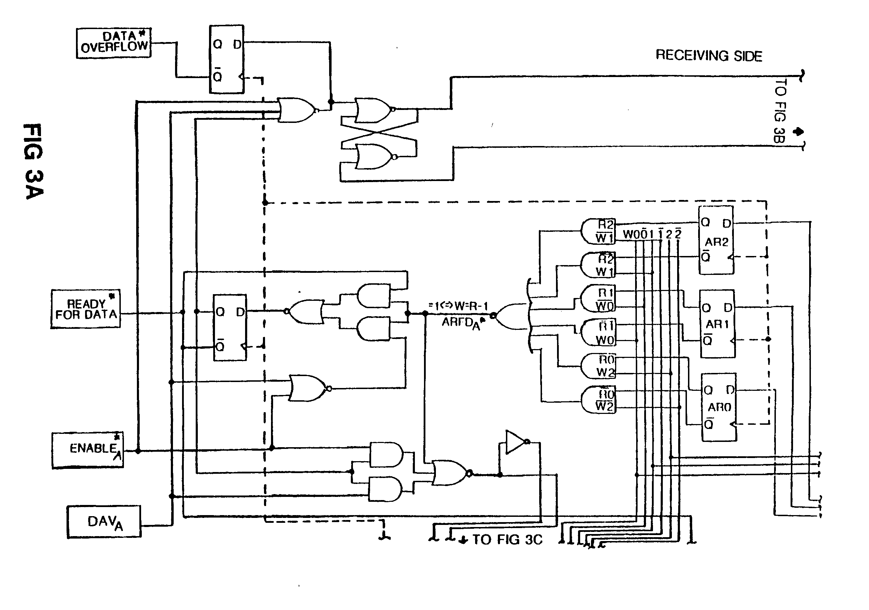

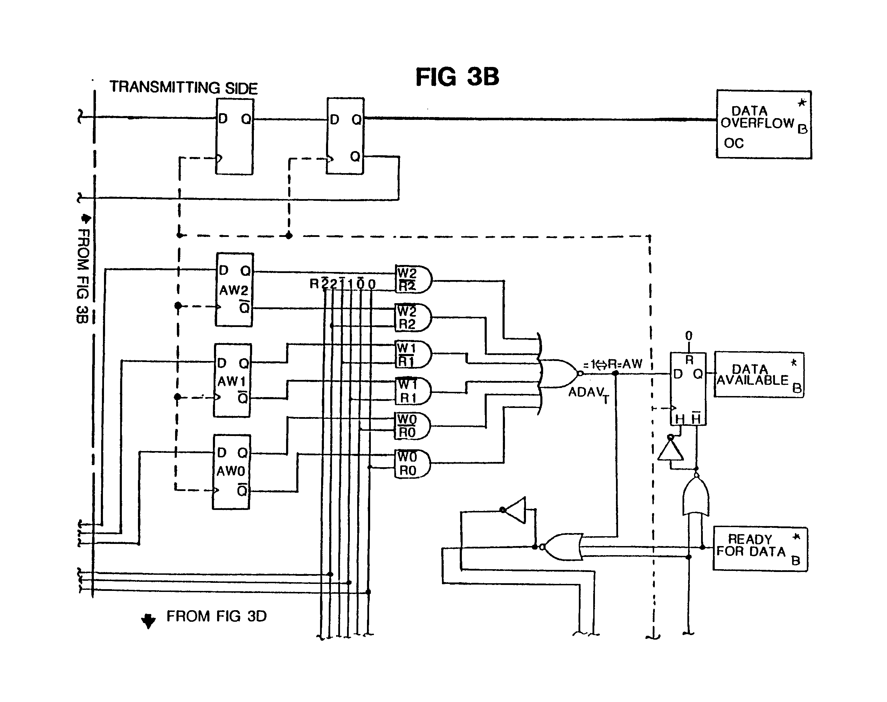

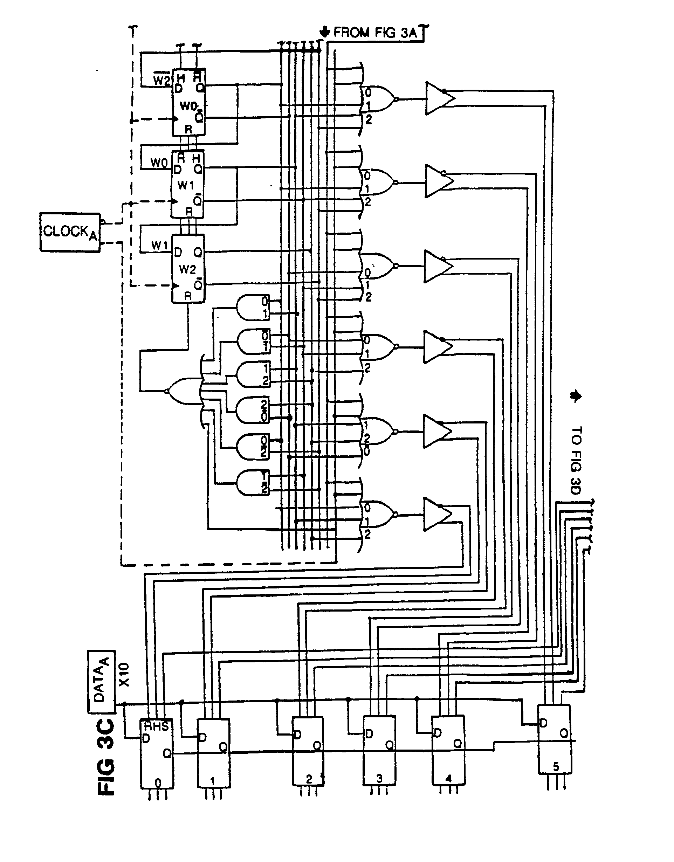

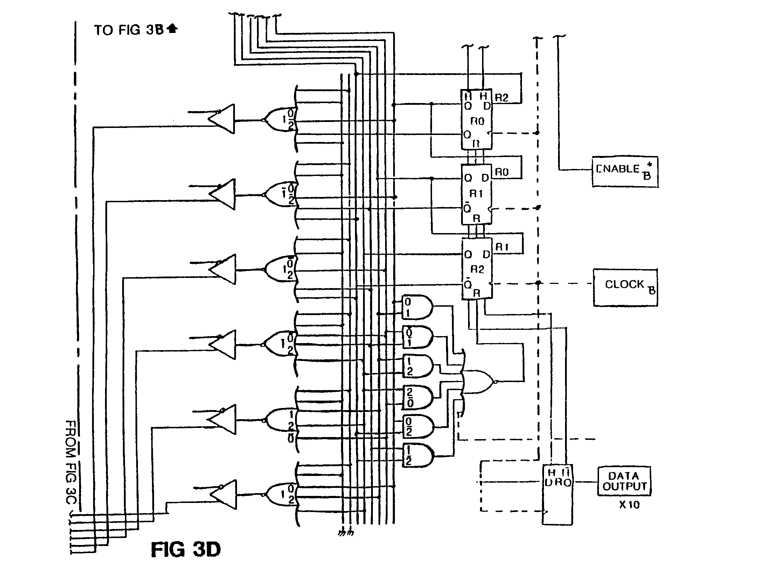

Detailed design of the synchronizer system shown in the functional block diagram of Figure 2 is disclosed in Figure 3, where the two port memory is, for example, an integrated circuit TYPE SN54170 manufactured by Texas Instruments Incorporated, and the unit distance code is a Gray code.

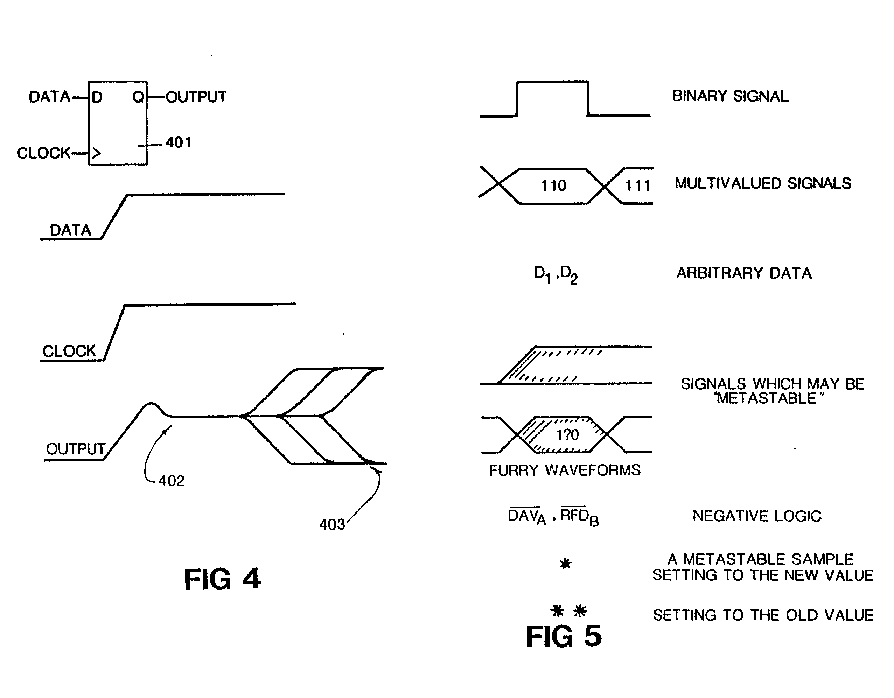

The synchronizing system will hereafter be more precisely explained as regards the timing of the operation. In Figure 4, a flip-flop 401 used for the synchronizer is shown, where metastable behavior of the output of the flip-flop 401 is illustrated. When the flip-flop 401 receives data and a clock signal, the output of the flip-flop 401 remains at an invalid level for an arbitrarily long time as illustrated in Figure 4 as part 402. When it finally resolves it may go to either high or low state, regardless of input, as illustrated in Figure 4 as part 403.

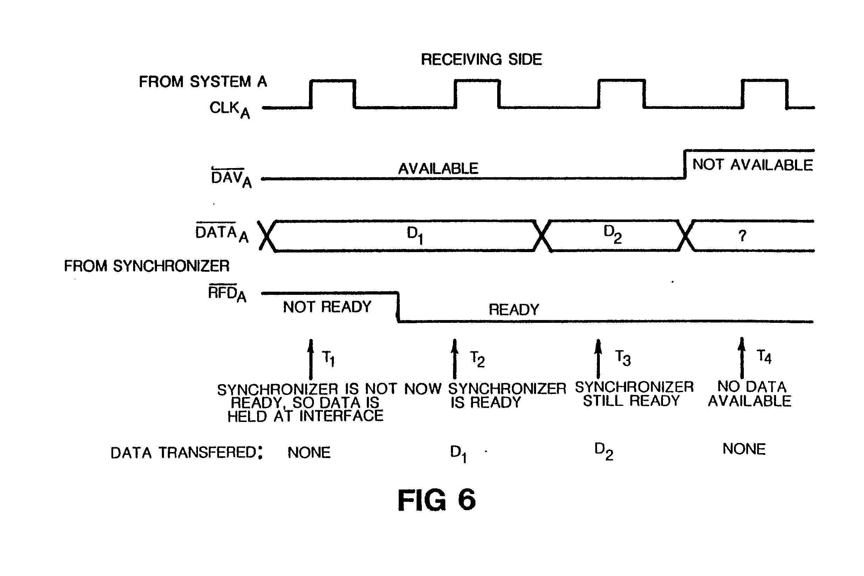

In Figure 5, abbreviations and conventions used for the following timing charts are shown.

In Figure 6, the receiving side of the synchronizer receives the clock signal CLK A, the data available signal DAV A, and the data DATA A including D1 and D2 from the system A. When the synchronizer is ready for receiving the data DATA A, it provides the ready for data signal RFD A to the system A. At the time T1 the synchronizer is not ready, so that data is held at interface and the data is not received by the synchronizer. At the time T2 the synchronizer is now ready, then the data D1 is received by the synchronizer. At the time T3 the synchronizer is still ready, so the data D2 is received by the synchronizer. At the time T4 the synchronizer is still ready, but the system A is not available, therefore the data is not received by the synchronizer.

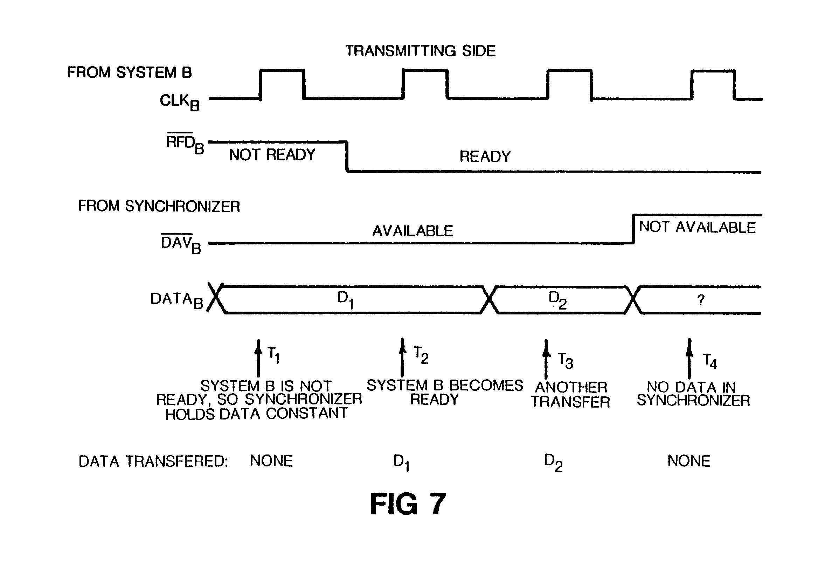

In Figure 7, the transmitting side of the synchronizer receives the clock signal CLK B and the ready-for-data signal RFD B from the system B. When the synchronizer is available to transmit the data, it provides the data available signal DAV B and the data DATA B to the system B. At the time T1 the system B is not ready, so the synchronizer holds the data constant and the data is not transmitted by the synchronizer. At the time T2 the system B becomes ready, so the data D1 is transmitted to the system B. At the time T3 the system B is still ready, so the data D2 is transmitted to the system B. At the time T4 there is no data in the synchronizer, so no transmission occurs.

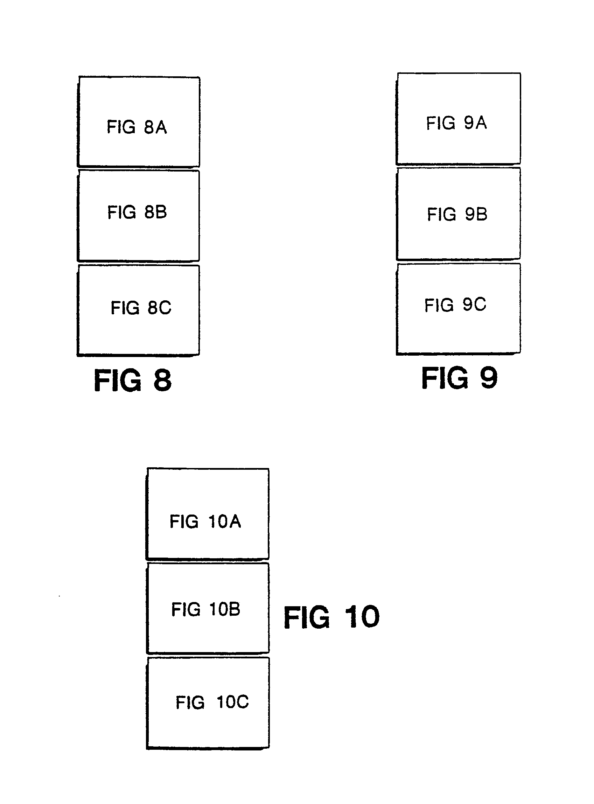

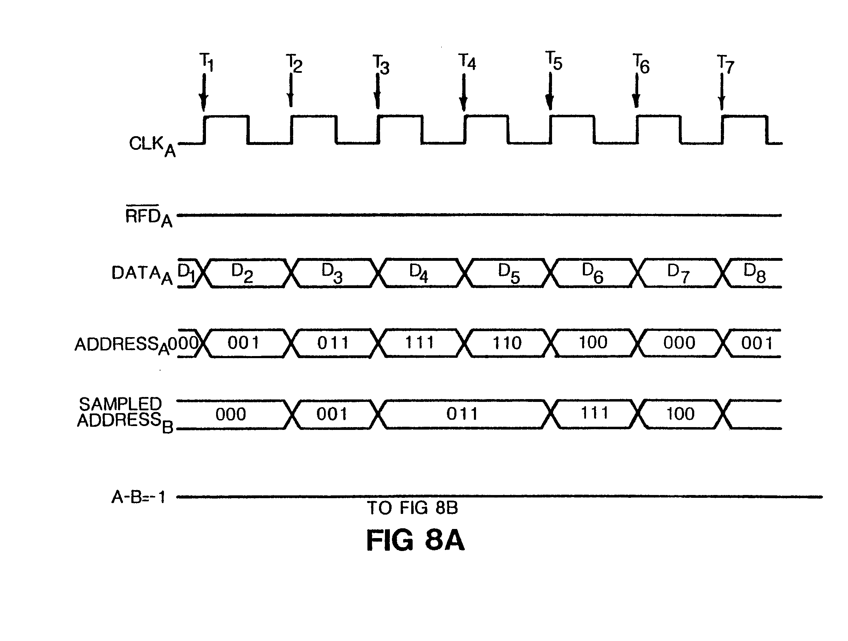

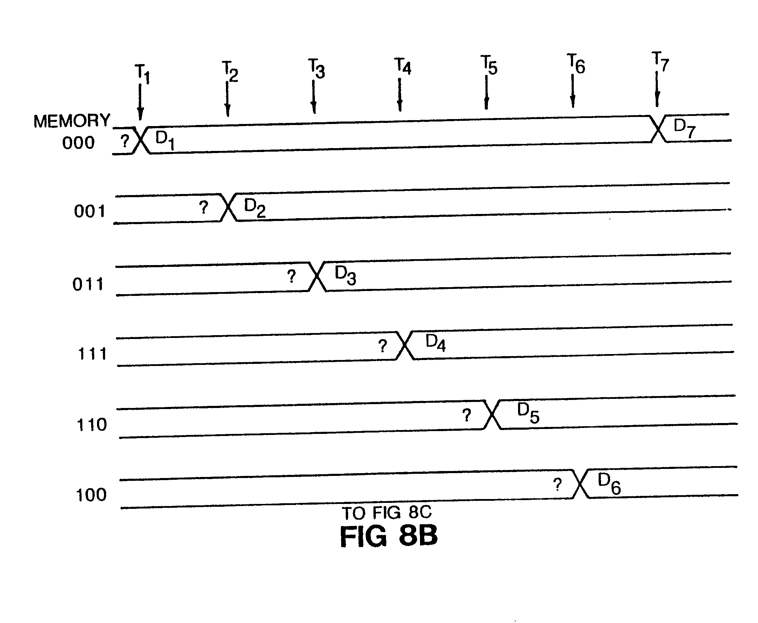

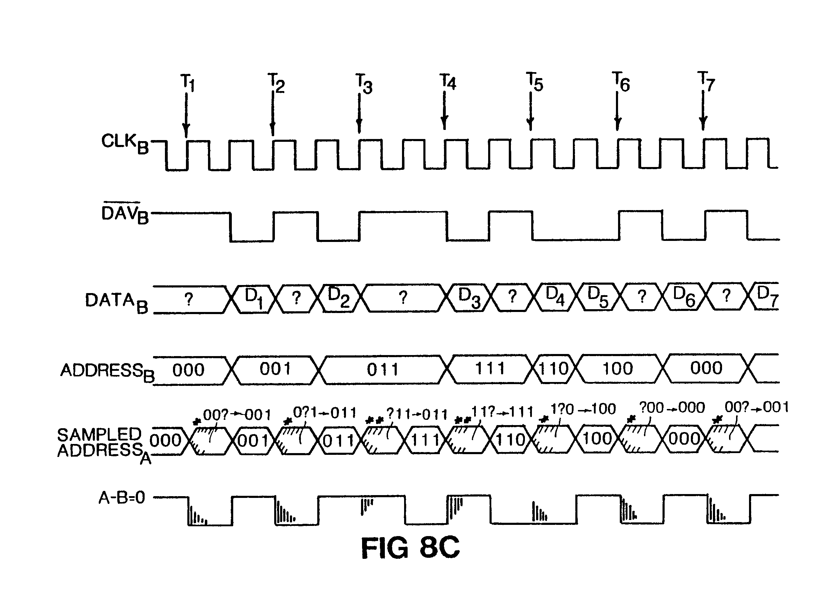

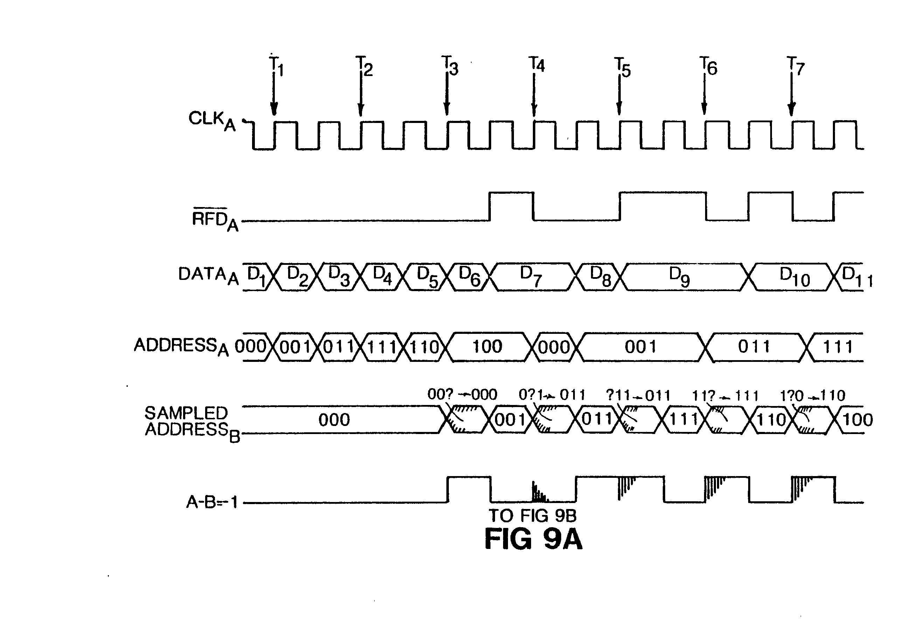

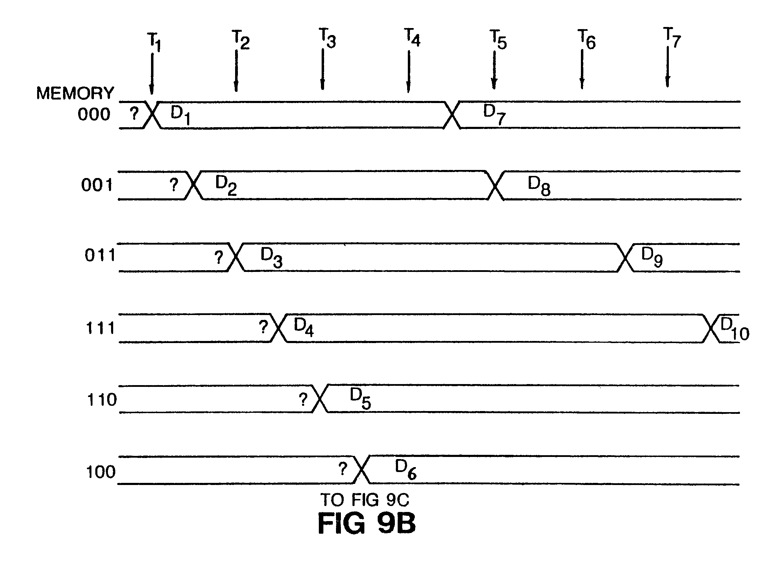

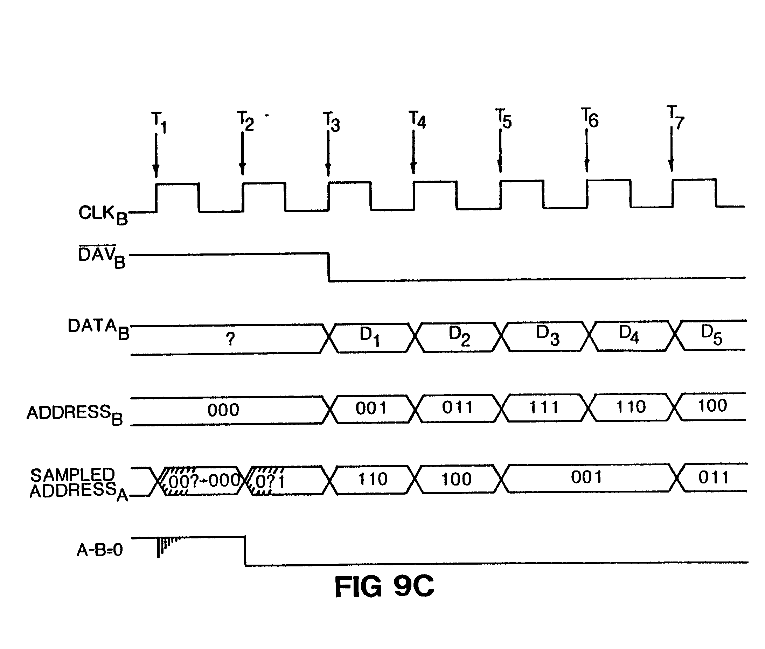

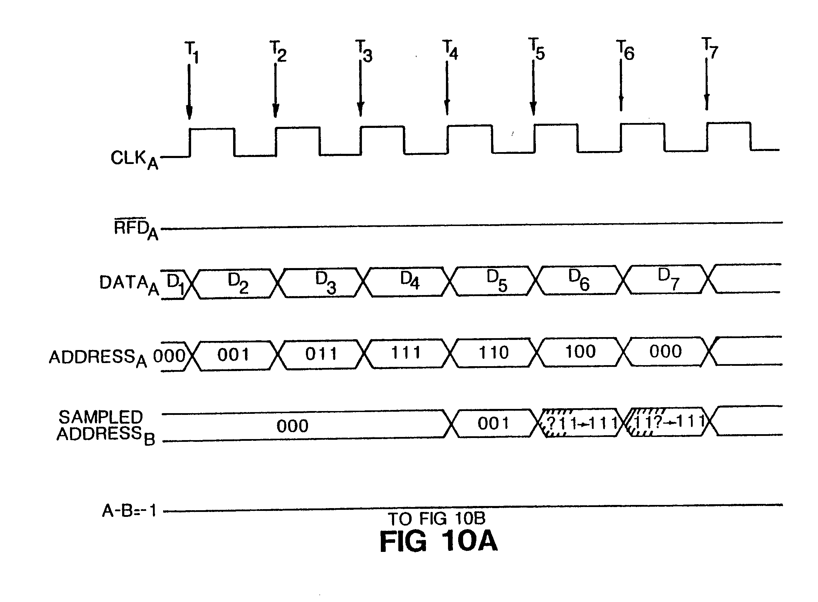

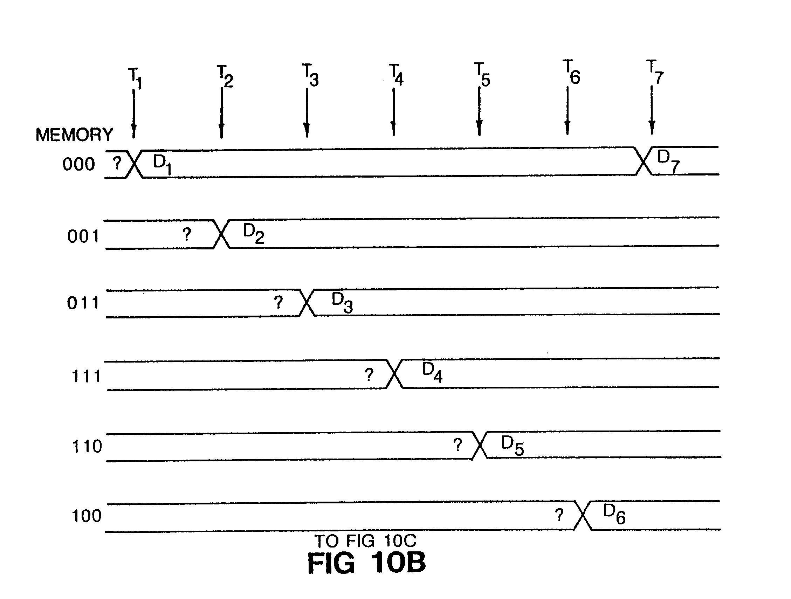

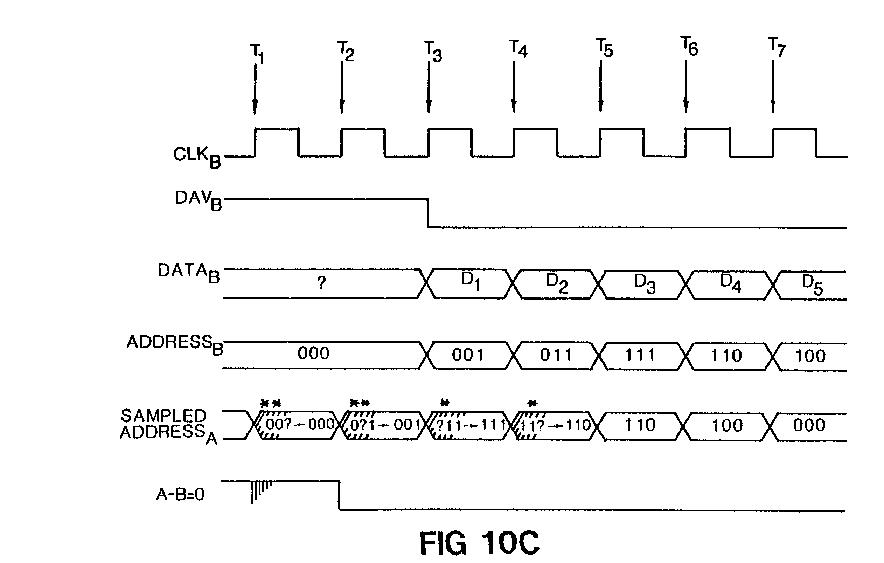

In referring to Figures 8 through 10, there may be three cases since the two interfacing clocks are non-correlated. First, Figure 8 shows that the receiving clock CLK A of the synchronizer system from the system A is slower than the transmitting clock CLK B of the synchronizer system to the system B, namely, the data is sent out of the synchronizer faster than it can be supplied. Second, Figure 9 shows that the receiving clock CLK A from the system A is faster than the transmitting clock CLK B to the system B, namely, the data would potentially be supplied to the synchronizer faster than it would be taken out. Third, Figure 10 shows that the receiving clock CLK A from the system A is equal to the transmitting clock CLK B to the system B. In each of these cases the precise details of timing will depend on clock phases and frequencies, so the timing diagrams are representative but not exhaustive. In referring to Figure 8, when the data is removed from the synchronizer faster than it is supplied, valid data cannot be sent for each transmitting clock cycle. A handshake line indicates that no data is available, and the value of the data output should be ignored. If constant data is required on the output side, for example, in a communication system, this handshake line can be used to control the generation of idle or dummy characters. However, the synchronizer only indicates the presence or absence of valid data. It does not generate dummy characters in its own logic circuit. In referring to Figure 9, when data is supplied to the synchronizer faster than it is taken out, data will accumulate in the synchronizer. To avoid data overflow a handshake line is provided to the data source telling if too much data is being accumulated in the synchronizer. In referring to Figure 10, when data is supplied to the synchronizer at the same rate as it is being removed, the entirely synchronous operation through the systems can be performed. After a steady state filling of the two port memory is reached to accommodate the given phase difference between the receiving clock and the transmitting clock, the synchronizer will always be ready for data and it will always have valid data available. Similarly, the synchronizer is capable of receiving information from the data source telling if valid data is sent, and from the sink telling if the sink is ready to accept more data. The operation of the synchronizer is not dependent on the continuity of the clocks, thus it will work with interrupted or varying clock rates as well. The maximum delay from write to read, that is, delay through the synchronizer, is the sum of one receiving clock cycle and one transmitting clock cycle. If N bytes of data were already accumulated in the synchronizer, an additional delay of N transmitting clock cycles are added.

As explained above, the essence of the synchronizing system is that the memory cells in the two port memory are addressed in a unit distance code so that sampling an address during a transition will give as an output either the previous address or the coming address, provided metastable setting is reached in the allowed time period. As a result, in an ambiguous sampling which settles from the metastable state arbitrarily into a valid logic one or zero, the least desirable possibility would be a delay in writing one receiving clock cycle or in reading one transmitting clock cycle. This delaying effect does not accumulate after several consecutively ambiguous samplings based on the unit distance code. It is noted that data is never sampled asynchronously and that the outcome of the asynchronous address sampling is allowed to arbitrarily settle to a logic one or zero state. It is also an important feature of the synchronizing system that the synchronizer is capable of receiving the data from the system A at a first address whose succeeding addresses are encoded in the unit distance code by determining that the two port memory is not full, and is also capable of transmitting the data to the system B from the same address to the first address and the succeeding addresses of the first address by determining that the two port memory is not empty.

**Claims**

1. A synchronizing system comprising:
   first system means (102) having data synchronized with a first clock signal;
   second system means (103) having the data to be synchronized with a second clock signal being independent from the first clock signal; and
   synchronizer means (101) having a two port memory (201) for respectively receiving data from the first system means (102) and for transmitting said data to the second system means (103), the synchronizer means (101) receiving data from the first system means (102) whilst said memory (201) is not full and transmitting the data to the second system means (103) whilst said memory (201) is not empty,
   characterized in that said synchronizer means (101) addresses said memory means (201) in a unit distance code.

2. A synchronizing system according to claim 1, wherein the synchronizer means consists of a one chip integrated circuit.

3. A synchronizing system according to claim 1, wherein the first clock signal is faster than the second clock signal.

4. A synchronizing system according to claim 1, wherein the first clock signal is the same as the second clock signal.

5. A synchronizing system according to claim 1, wherein the first clock signal is slower than the second clock signal.

6. A synchronizing system according to claim 1, wherein the unit distance code is a Gray code.

**Patentansprüche**

1. Synchronisiersystem mit
— einem ersten System (102), in welchem Daten mit einem ersten Taktgebersignal synchronisiert werden;
— einem zweiten System (103), in welchem die Daten mit einem zweiten Taktgebersignal zu synchronisieren sind, das von dem ersten Taktgebersignal unabhängig ist; und
— Synchronisiermitteln (101) mit einem Speicher (201) mit zwei Anschlüssen, um Daten von dem ersten System (103) zu empfangen und die Daten an das zweite System (103) zu übertragen, wobei die Synchronisiermittel (101) Daten von dem ersten System (102) empfangen, während der Speicher (201) nicht voll ist, und die Daten an das zweite System (103) übertragen, während der Speicher (201) nicht leer ist.
dadurch gekennzeichnet, daß die Synchronisiermittel (101) den Speicher (201) mit einem Code mit Hammingdistanz 1 adressieren.

2. Synchronisiersystem nach Anspruch 1, wobei die Synchronisiermittel aus einer integrierten Schaltung auf einem Chip bestehen.

3. Synchronisiersystem nach Anspruch 1, wobei das erste Taktgebersignal schneller als das zweite Taktgebersignal ist.

4. Synchronisiersystem nach Anspruch 1, wobei das erste Taktgebersignal gleich dem zweiten Taktgebersignal ist.

5. Synchronisiersystem nach Anspruch 1, wobei das erste Taktgebersignal langsamer als das zweite Taktgebersignal ist.

6. Synchronisiersystem nach Anspruch 1, wobei der Code mit Hammingdistanz 1 ein Gray-Code ist.

**Revendications**

1. Système de synchronisation comprenant:
un premier moyen formant un système (102) dont les données sont synchronisées avec un premier signal d'horloge;
un second moyen formant un système (103) dont les données doivent être synchronisées avec un second signal d'horloge indépendant du premier signal d'horloge; et
un moyen formant un synchroniseur (101) possédant une mémoire (201) à deux portes d'accès, servant respectivement à recevoir des données du premier système (102) et à transmettre ces données au second système (103), le synchroniseur (101) recevant des données du premier système (102) tant que la mémoire (201) n'est pas pleine et transmettant les données vers le second moyen (103) tant que la mémoire (201) n'est pas vide,
caractérisé en ce que le synchroniseur (101) adresse la mémoire (201) dans un code à distance de Hamming.

2. Système de synchronisation selon la revendication 1, dans lequel le synchroniseur est formé par un circuit intégré à puce unique.

3. Système de synchronisation selon la revendication 1, dans lequel le premier signal d'horloge est plus rapide que le second signal d'horloge.

4. Système de synchronisation selon la revendication 1, dans lequel le premier signal d'horloge est le même que le second signal d'horloge.

5. Système de synchronisation selon la revendication 1, dans lequel le premier signal d'horloge est plus lent que le second signal d'horloge.

6. Système de synchronisation selon la revendication 1, dans lequel le code à distance de Hamming est un code de Gray.

**FIG 1**

SYSTEM A

102

$\overline{DAV}_A$

$\overline{RFD}_A$

$CLK_A$

$DATA_A$

101

SYNCHRONIZER

RECEIVING SIDE

TRANSMITTING SIDE

101A      101B

$\overline{DAV}_B$

$\overline{RFD}_B$

$CLK_B$

$DATA_B$

SYSTEM B

103

FIG 2A | FIG 2B

**FIG 2**

FIG 3A | FIG 3B

FIG 3C | FIG 3D

**FIG 3**

EP 0 217 486 B1

FIG 2A

2

**FIG 2B**

FIG 3A

# FIG 3B

EP 0 217 486 B1

FIG 3C

FIG 3D

DATA—D    Q—OUTPUT

CLOCK—>          —401

DATA

CLOCK

OUTPUT          —402

                    403

**FIG 4**

BINARY SIGNAL

110    111    MULTIVALUED SIGNALS

$D_1, D_2$    ARBITRARY DATA

SIGNALS WHICH MAY BE "METASTABLE"

1?0

FURRY WAVEFORMS

$\overline{DAV}_A , \overline{RFD}_B$    NEGATIVE LOGIC

*    A METASTABLE SAMPLE SETTING TO THE NEW VALUE

* *    SETTING TO THE OLD VALUE

**FIG 5**

FIG 6

TRANSMITTING SIDE

FROM SYSTEM B

$CLK_B$

$\overline{RFD}_B$    NOT READY    READY

FROM SYNCHRONIZER

$\overline{DAV}_B$    AVAILABLE    NOT AVAILABLE

$DATA_B$    $D_1$    $D_2$    ?

$T_1$    $T_2$    $T_3$    $T_4$

SYSTEM B IS NOT READY, SO SYNCHRONIZER HOLDS DATA CONSTANT    SYSTEM B BECOMES READY    ANOTHER TRANSFER    NO DATA IN SYNCHRONIZER

DATA TRANSFERED:    NONE    $D_1$    $D_2$    NONE

## FIG 7

EP 0 217 486 B1

FIG 8A

FIG 8B

FIG 8C

**FIG 8**

FIG 9A

FIG 9B

FIG 9C

**FIG 9**

FIG 10A

FIG 10B

FIG 10C

**FIG 10**

EP 0 217 486 B1

$T_1$  $T_2$  $T_3$  $T_4$  $T_5$  $T_6$  $T_7$

$CLK_A$

$\overline{RFD}_A$

$DATA_A$  $D_1$ $D_2$ $D_3$ $D_4$ $D_5$ $D_6$ $D_7$ $D_8$

$ADDRESS_A$ 000  001  011  111  110  100  000  001

SAMPLED
$ADDRESS_B$  000  001  011  111  100

$A-B=-1$

TO FIG 8B

# FIG 8A

TO FIG 8C

**FIG 8B**

FIG 8C

14

FIG 9A

TO FIG 9B

TO FIG 9C
FIG 9B

FIG 9C

EP 0 217 486 B1

FIG 10A

TO FIG 10B

CLK_A

$\overline{RFD}_A$

DATA_A

ADDRESS_A

SAMPLED ADDRESS_B

A-B=1

MEMORY

T$_1$ T$_2$ T$_3$ T$_4$ T$_5$ T$_6$ T$_7$

000 ? $D_1$ $D_7$

001 ? $D_2$

011 ? $D_3$

111 ? $D_4$

110 ? $D_5$

100 ? $D_6$

TO FIG 10C

**FIG 10B**

FIG 10C

EP 0 217 486 B1